(19) Europäisches Patentamt
European Patent Office
Office européen des brevets

(11) EP 3 957 687 A1

(12) # EUROPEAN PATENT APPLICATION
published in accordance with Art. 153(4) EPC

(43) Date of publication:
**23.02.2022 Bulletin 2022/08**

(21) Application number: **20791333.6**

(22) Date of filing: **02.04.2020**

(51) International Patent Classification (IPC):
***C08L 71/00*** *(2006.01)* ***C08J 5/04*** *(2006.01)*

(52) Cooperative Patent Classification (CPC):
**C08J 5/04; C08L 71/00**

(86) International application number:
**PCT/JP2020/015130**

(87) International publication number:
**WO 2020/213406 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.04.2019 JP 2019080026**
**19.04.2019 JP 2019080027**
**19.04.2019 JP 2019080028**

(71) Applicant: **Teijin Limited**
**Osaka 530-0005 (JP)**

(72) Inventors:
- **ODA, Akimichi**
**Osaka-shi Osaka 530-0005 (JP)**
- **KUWAHARA, Hiroaki**
**Osaka-shi Osaka 530-0005 (JP)**

(74) Representative: **Carpmaels & Ransford LLP**
**One Southampton Row**
**London WC1B 5HA (GB)**

(54) **THERMOPLASTIC RESIN PREPREG, PRODUCTION METHOD THEREOF, AND FIBER-REINFORCED COMPOSITE MATERIAL**

(57) An object of the invention is to provide a thermoplastic resin prepreg that gives a fiber-reinforced composite material with excellent mechanical strength even through molding at a low temperature within a short period of time. The thermoplastic resin prepreg of the invention is a thermoplastic resin prepreg including at least a reinforcing fiber substrate and a thermoplastic resin composition partially or completely impregnated in the reinforcing fiber substrate. The thermoplastic resin prepreg is configured such that the thermoplastic resin composition contains 50 mass% or more of polyetherketoneketone (PEKK) based on the total thermoplastic resin composition, and is a thermoplastic resin composition having a crystallization enthalpy of 22 J/g or more as measured by a differential scanning calorimeter (DSC) at a cooling rate of 50°C/min from 400°C.

EP 3 957 687 A1

**Description**

Technical Field

The present invention relates to a prepreg including a reinforcing fiber substrate and a thermoplastic resin composition impregnated therein, and also to a method for producing the same.

Background Art

Fiber-reinforced composite materials obtained by combining reinforcing fiber materials, such as carbon fibers, glass fibers, and aramid fibers, with various matrix resins have been widely used in various fields and applications. Conventionally, in the aerospace field, industrial field, and the like where high levels of mechanical characteristics, heat resistance, and the like are required, as matrix resins, thermosetting resins such as unsaturated polyester resins, epoxy resins, and polyimide resins have been mainly used.

However, these thermosetting resins have the drawback of being brittle and inferior in impact resistance. Therefore, particularly in the aerospace field, in terms of the impact resistance of the resulting composite material and molding cost, thermoplastic resins have been studied as matrix resins.

Among thermoplastic resins, in the aerospace field, polyaryletherketones (PAEKs) such as polyetheretherketone (PEEK) and polyetherketoneketone (PEKK) have excellent heat resistance, chemical resistance, and mechanical strength and thus are expected. In particular, PEKK can be changed in characteristics by changing the content ratio between terephthaloyl moieties (T) and isophthaloyl moieties (I) contained in its structure, allowing for the characteristics to be adjusted according to the characteristics required for each member and the molding conditions. For such reasons, the development thereof has been accelerated in recent years.

However, when, for the purpose of reducing the molding cost, a fiber-reinforced composite material is molded under molding conditions at a lower temperature within a shorter period of time, the crystallinity of PEKK in the obtained fiber-reinforced composite material decreases, leading to a problem in that the mechanical properties, such as impact resistance and toughness, and chemical resistance are adversely affected.

As a method for improving the mechanical properties of a composite material using PEKK as a matrix resin, for example, PTL 1 proposes a method in which a specific polyether sulfone resin is mixed with PEKK. However, according to this method, although some physical properties, such as heat resistance and impact resistance, are slightly improved, other physical properties, such as the elastic modulus of the resin, are deteriorated. In addition, in the case of molding at a low temperature within a short period of time, sufficient effects have not been obtained.

Summary of Invention

Technical Problem

An object of the invention is to provide a thermoplastic resin prepreg that gives a fiber-reinforced composite material with excellent mechanical strength even through molding at a low temperature within a short period of time.

Solution to Problem

The present inventors have conducted research to solve the above problems. As a result, they have found that when a thermoplastic resin composition whose thermal characteristics measured by a differential scanning calorimeter (DSC) meet specific conditions is used, even through molding at a low temperature within a short period of time, the mechanical properties of the obtained fiber-reinforced composite material can be improved, and thus accomplished the invention.

The thermoplastic resin prepreg of the invention that solves the above problems is a thermoplastic resin prepreg including at least a reinforcing fiber substrate and a thermoplastic resin composition partially or completely impregnated in the reinforcing fiber substrate, the thermoplastic resin prepreg being configured such that the thermoplastic resin composition contains 50 mass% or more of polyetherketoneketone (PEKK) based on the total thermoplastic resin contained in the resin composition, and is a thermoplastic resin composition having a crystallization enthalpy of 22 J/g or more as measured by a differential scanning calorimeter (DSC) at a cooling rate of 50°C/min from 400°C.

Another mode of the invention is a thermoplastic resin prepreg including at least a reinforcing fiber substrate and a thermoplastic resin composition partially or completely impregnated in the reinforcing fiber substrate, the thermoplastic resin prepreg being configured such that the thermoplastic resin composition contains 50 mass% or more of polyetherketoneketone (PEKK) based on the total thermoplastic resin composition, and the PEKK includes a first PEKK and a second PEKK having a lower reduced viscosity than the first PEKK. In the invention, it is preferable that the

reduced viscosities of the first PEKK and the second PEKK satisfy the following formulas (1) and (2):

$$50\ cm^3/g \leq \text{reduced viscosity of the first PEKK} \leq 200\ cm^3/g \quad \ldots \text{formula (1)}$$

$$2\ cm^3/g \leq \text{reduced viscosity of the second PEKK} \leq 100\ cm^3/g \quad \ldots \text{formula (2)}.$$

In addition, it is preferable that the mass ratio of the first PEKK to the second PEKK is 99.9995/0.0005 to 50/50.

Another aspect of the invention is a thermoplastic resin prepreg including at least a reinforcing fiber substrate and a thermoplastic resin composition partially or completely impregnated in the reinforcing fiber substrate, the thermoplastic resin prepreg being configured such that the thermoplastic resin composition contains 50 mass% or more of PEKK based on the total thermoplastic resin contained in the resin composition, and the total amount of aluminum, phosphorus, and sodium contained in the PEKK is 100 ppm or less. It is preferable that the amount of aluminum contained in the PEKK is 45 ppm or less.

A thermoplastic resin prepreg according to a still another aspect of the invention is a thermoplastic resin prepreg including at least a reinforcing fiber substrate and a thermoplastic resin composition partially or completely impregnated in the reinforcing fiber substrate, the thermoplastic resin prepreg being characterized in that the thermoplastic resin composition contains 50 mass% or more of polyetherketoneketone (PEKK) based on the total thermoplastic resin contained in the resin composition, and, of all arylene ether ketone structural units represented by the following chemical formula (I) contained in the PEKK, the proportion of structural isomers in which the ether group is attached to Ar in the ortho-position relative to the ketone group is 1.6% or less.

[Chemical Formula 1]

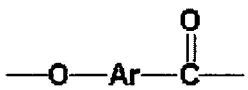

・・・(I)

(In the formula, Ar represents an optionally substituted arylene group).

The invention encompasses a method for producing a thermoplastic resin prepreg, including impregnating a reinforcing fiber substrate with a thermoplastic resin composition, and also a fiber-reinforced composite material including at least a reinforcing fiber substrate and a thermoplastic resin composition.

## Advantageous Effects of Invention

When the thermoplastic resin prepreg of the invention is used, even through molding at a low temperature within a short period of time, a fiber-reinforced composite material with excellent mechanical strength can be obtained.

The fiber-reinforced composite material of the invention can be molded at low cost and also has excellent mechanical strength, and thus is suitable for use as a member in the aerospace field and the like.

## Description of Embodiments

### 1. Prepreg

Hereinafter, the thermoplastic resin prepreg of the invention will be described in detail.

The thermoplastic resin prepreg of the invention includes at least a reinforcing fiber substrate and a thermoplastic resin composition partially or completely impregnated in the reinforcing fiber substrate. The thermoplastic resin composition used in the invention contains at least polyetherketoneketone (PEKK) in an amount of 50 mass% or more based on the total thermoplastic resin contained in the resin composition. When the PEKK content is within this range, the original characteristics of the PEKK resin are exerted, and a fiber-reinforced composite material having excellent mechanical properties can be obtained. In the case where the PEKK content is too low, due to the coexistence of non-PEKK resins, the original characteristics of the PEKK may be impaired, leading to deterioration of the mechanical

properties of the obtained fiber-reinforced composite material. The PEKK content is preferably 70 mass% or more, and more preferably 90 mass% or more. The upper limit of the PEKK content is not particularly set and may be 100 mass%, preferably 99.99 mass% or less. The thermoplastic resin composition used in the invention may also contain other thermoplastic resins besides the PEKK resin, and additional additives.

The thermoplastic resin composition used for the thermoplastic resin prepreg of the invention is further a thermoplastic resin composition having a crystallization enthalpy (ΔHcd) of 22 J/g or more as measured by a differential scanning calorimeter (DSC) at a cooling rate of 50°C/min from 400°C. When the crystallization enthalpy of the thermoplastic resin composition is 22 J/g or more, even in the case where a fiber-reinforced composite material is molded within a short period of time, the thermoplastic resin composition sufficiently crystallizes, and thus a fiber-reinforced composite material with excellent mechanical strength can be obtained. When the crystallization enthalpy of the thermoplastic resin composition is too low, the thermoplastic resin composition may not reach a sufficient degree of crystallinity within the time frame of the process of molding a fiber-reinforced composite material, leading to deterioration of the mechanical properties of the obtained fiber-reinforced composite material; therefore, this is undesirable. The crystallization enthalpy of the thermoplastic resin composition used in the invention is preferably 25 J/g or more, more preferably 30 J/g or more, and particularly preferably 32 J/g or more. The upper limit of the crystallization enthalpy is not particularly set, and 130 J/g is sufficient.

In the invention, it is preferable that the thermal characteristics of the thermoplastic resin composition measured by a differential scanning calorimeter (DSC) meet the following requirements (A) and (B).

(A) The melting point as measured by a differential scanning calorimeter (DSC) in a temperature range of 30 to 400°C at a heating rate of 10°C/min is 350°C or less.
(B) The crystallization enthalpy as measured by a differential scanning calorimeter (DSC) at a cooling rate of 50°C/min from 400°C is 22 J/g or more, and the cooling crystallization temperature is 230°C or more.

Incidentally, the melting point (Tm) in (A) above is the value of the peak top of an endothermic peak that appears on the DSC chart during the heating process from 30°C to 400°C. In the case where two or more peaks are present, among such peaks, the value of the peak top with the greatest height from the baseline is referred to. In addition, the cooling crystallization temperature (Tcd) in (B) above is the value of the peak top of an endothermic peak observed on the DSC chart during the cooling process to 30°C after holding 400°C for 1 minute. In the case where two or more peaks are present, among such peaks, the value of the peak top with the greatest height from the baseline is referred to. Further, the crystallization enthalpy (ΔHcd) is obtained by integrating the peak having the highest peak top value observed during the cooling process.

When the melting point of the thermoplastic resin composition is within this range, a prepreg with excellent moldability can be obtained. When the melting point of the thermoplastic resin composition is too high, the thermoplastic resin constituting the prepreg, the additives contained therein, and the like may cause thermal decomposition, leading to deterioration of the physical properties of the obtained composite material. The melting point of the thermoplastic resin composition is more preferably 345°C or less, and still more preferably 340°C or less. The lower limit of the melting point of the thermoplastic resin composition is not particularly set, but is, in terms of heat resistance, preferably 250°C or more, more preferably 280°C or more, and still more preferably 300°C or more.

In addition, when the cooling crystallization temperature is 230°C or more, even in the case where a fiber-reinforced composite material is molded at a low temperature within a short period of time, the thermoplastic resin composition easily crystallizes, and thus a fiber-reinforced composite material with excellent mechanical strength can be obtained. When the cooling crystallization temperature is too low, the crystallization of the thermoplastic resin composition may tend to be difficult to proceed, leading to deterioration of the mechanical properties of the obtained fiber-reinforced composite material. The cooling crystallization temperature is more preferably 240°C or more, and more preferably 250°C or more. The upper limit of the cooling crystallization temperature of the thermoplastic resin composition is not particularly set, but is preferably 340°C or less, and more preferably 320°C or less.

Another mode of the invention is a thermoplastic resin prepreg including at least a reinforcing fiber substrate and a thermoplastic resin composition partially or completely impregnated in the reinforcing fiber substrate, the thermoplastic resin prepreg being configured such that the thermoplastic resin composition contains 50 mass% or more of polyetherketoneketone (PEKK) based on the total thermoplastic resin contained in the resin composition, and the PEKK includes a first PEKK and a second PEKK having a lower reduced viscosity than the first PEKK. When the above two kinds of PEKK are mixed, the crystallinity of the thermoplastic resin composition can be enhanced, and, even through molding at a low temperature within a short period of time, a fiber-reinforced composite material with excellent mechanical strength can be obtained.

In the invention, in order to enhance the crystallinity of the thermoplastic resin composition, it is preferable that the reduced viscosities of the first PEKK and the second PEKK satisfy the following formulas (1) and (2).

$$50\ cm^3/g \leq \text{reduced viscosity of the first PEKK} \leq 200\ cm^3/g$$

... formula (1)

$$2\ cm^3/g \leq \text{reduced viscosity of the second PEKK} \leq 100\ cm^3/g$$

... formula (2)

When the reduced viscosity of the first PEKK is within this range, the resulting thermoplastic resin prepreg is satisfactory in both moldability and the mechanical properties of the obtained composite material. When the reduced viscosity of the first PEKK is too low, the mechanical properties of the obtained fiber-reinforced composite material may be deteriorated, while when the reduced viscosity is too high, the viscosity during melting may be extremely high, leading to deterioration of impregnation. The reduced viscosity of the first PEKK is more preferably 60 to 180 $cm^3/g$, and still more preferably 70 to 160 $cm^3/g$.

In addition, when the reduced viscosity of the second PEKK is within this range, the crystallinity of the thermoplastic resin can be further improved. The reduced viscosity of the second PEKK is more preferably 2.5 to 90 $cm^3/g$, still more preferably 3 to 80 $cm^3/g$, and particularly preferably 10 to 60 $cm^3/g$.

The melting point of the second PEKK used in the invention is preferably 20°C or more higher than that of the first PEKK.

In addition, it is preferable that the mass ratio of the first PEKK to the second PEKK is 99.9995/0.0005 to 50/50. When the mixing ratio between the two kinds of PEKK is set within this range, the crystallinity of the thermoplastic resin composition can be further enhanced. The mass ratio of the first PEKK to the second PEKK is more preferably 99.995/0.005 to 60/40, still more preferably 99.95/0.05 to 80/20, and particularly preferably 99.9/0.1 to 90/10.

The first PEKK and the second PEKK may each have a linear, cyclic, or branched structure. However, it is preferable that the first PEKK, in particular, has a linear polymeric structure.

The thermoplastic resin prepreg according to another aspect of the invention is a thermoplastic resin prepreg wherein the total amount of aluminum, phosphorus, and sodium contained in the PEKK is 100 ppm or less. When the total amount of aluminum, phosphorus, and sodium contained in the PEKK is 100 ppm or less, such PEKK has excellent crystallinity and melt stability, and thus a fiber-reinforced composite material with excellent mechanical properties can be obtained.

The total amount of aluminum, phosphorus, and sodium contained in the PEKK is preferably 80 ppm or less, and more preferably 50 ppm or less. In addition, the amount of aluminum contained in the PEKK is more preferably 30 ppm or less, and still more preferably 20 ppm or less. The lower limit of the total amount of aluminum, phosphorus, and sodium is not particularly set, and 0.01 ppm is sufficient.

In addition, the amount of aluminum contained in the PEKK is preferably 45 ppm or less. When the amount of aluminum contained in the PEKK is 45 ppm or less, the crystallinity and melt stability of the PEKK can be further improved, and thus a fiber-reinforced composite material with even better mechanical properties can be obtained. The lower limit of the amount of aluminum is not particularly set, and 0.001 ppm is sufficient.

In the invention, the total amount of aluminum, phosphorus, and sodium or/and the amount of aluminum in the PEKK can be reduced, without particularly limitation, by washing and purifying the PEKK resin. Specifically, it is possible to employ a reprecipitation purification method, a Soxhlet extraction method, a stirring washing method in a dispersion system using a solvent, or the like. Among them, because of its high effectiveness in removing aluminum, phosphorus, and sodium, a reprecipitation purification method is suitable for use. The good solvent for PEKK used in the reprecipitation purification method is not particularly limited as long as it is a solvent capable of dissolving PEKK. However, because of its high dissolving power and the ease of acquisition, concentrated sulfuric acid is preferably used. In addition, the poor solvent for PEKK used in the reprecipitation purification method is not particularly limited as long as its PEKK solubility is lower than that of the good solvent. However, because of the ease of handling and acquisition, and also the high PEKK recovery rate after purification, for example, it is preferable to use water or an alcohol.

The thermoplastic resin prepreg according to yet another aspect of the invention is a thermoplastic resin prepreg wherein, of all arylene ether ketone structural units represented by the following chemical formula (I) contained in the PEKK, the proportion of structural isomers in which the ether group is attached to Ar in the ortho-position relative to the ketone group is 1.6% or less.

[Chemical Formula 2]

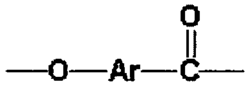 · · · (I)

(In the formula, Ar represents an optionally substituted arylene group).

When the content of structural isomers with ortho-linkages is 1.6% or less, such PEKK has excellent crystallinity, and thus a fiber-reinforced composite material with excellent mechanical properties can be obtained. The content of structural isomers with ortho-linkages is more preferably 1.5% or less. The lower limit of the content of structural isomers with ortho-linkages is not particularly limited, but 0.01% is sufficient.

In the invention, the method for reducing the content of structural isomers with ortho-linkages in the PEKK is not particularly limited, and reduction is possible by washing and purifying the PEKK resin. Specifically, it is possible to employ a reprecipitation purification method, a Soxhlet extraction method, a stirring washing method in a dispersion system using a solvent, or the like. Among them, in terms of the high effectiveness in removing structural isomers with ortho-linkages, the ease of operation, the ease of scale-up, and the like, a stirring washing method in a dispersion system using a solvent is suitable for use. The solvent used is not particularly limited. However, because of its high cleaning power and the ease of acquisition, a solvent selected from alcohols and carbon halides is preferably used. Examples of suitable alcohols include methanol, ethanol, and 2-propanol. In addition, as carbon halides suitable for use, dichloromethane, chloroform, and 1,2-dichloroethane can be mentioned.

The thermoplastic resin prepreg of the invention is a prepreg formed of a reinforcing fiber substrate partially or completely impregnated with the thermoplastic resin composition described above. The content of the thermoplastic resin composition in the entire prepreg is preferably 15 to 60 mass% based on the total mass of the prepreg. When the resin content is within this range, a fiber-reinforced composite material with even better mechanical properties can be obtained. The resin content is preferably 20 to 55 mass%, and more preferably 25 to 50 mass%. When the resin content is too low, voids and the like may occur in the obtained fiber-reinforced composite material, leading to deterioration of the mechanical properties. When the resin content is too high, the reinforcing effect of the reinforcing fiber may be insufficient, resulting in substantially low mechanical properties relative to the mass.

When the thermoplastic resin prepreg of the invention as described above is used, even through molding at a low temperature within a short period of time, a fiber-reinforced composite material with excellent mechanical strength can be obtained.

Hereinafter, the prepreg of the invention will be described in further detail.

(1-1) Reinforcing Fiber Substrate

The reinforcing fiber used as the reinforcing fiber substrate in the invention is not particularly limited. For example, carbon fibers, glass fibers, aramid fibers, silicon carbide fibers, polyester fibers, ceramic fibers, alumina fibers, boron fibers, metal fibers, mineral fibers, rock fibers, slag fibers, and the like can be mentioned.

Among these reinforcing fibers, carbon fibers, glass fibers, and aramid fibers are preferable. Carbon fibers are more preferable in that the specific strength and specific elastic modulus are excellent, and a fiber-reinforced composite material that is lightweight and has high strength can be obtained. Polyacrylonitrile (PAN)-based carbon fibers are particularly preferable in that the tensile strength is excellent.

In the case where a PAN-based carbon fiber is used as the reinforcing fiber, the tensile elastic modulus thereof is preferably 100 to 600 GPa, more preferably 200 to 500 GPa, and particularly preferably 230 to 450 GPa. In addition, the tensile strength is preferably 2,000 MPa to 10,000 MPa, and more preferably 3,000 to 8,000 MPa. The diameter of the carbon fiber is preferably 4 to 20 μm, and more preferably 5 to 10 μm. As a result of using such a carbon fiber, the mechanical characteristics of the obtained fiber-reinforced composite material can be improved.

In the invention, the reinforcing fiber substrate may be a reinforcing fiber bundle, or may also be used as a reinforcing fiber sheet obtained by forming a reinforcing fiber into a sheet. It is more preferable to use a reinforcing fiber sheet obtained by forming a reinforcing fiber into a sheet. As reinforcing fiber sheets, for example, a sheet obtained by aligning a large number of reinforcing fibers in one direction (UD sheet), a laminate sheet obtained by laminating a plurality of UD sheets with the fiber directions being the same or different, bidirectional woven fabrics such as plain weave and twill weave, multiaxial woven fabrics, non-woven fabrics, mats, knitted fabrics, braids, and paper obtained by paper-making from reinforcing fibers can be mentioned. Among them, when a reinforcing fiber in the form of a continuous fiber is formed into a sheet, and the resulting UD sheet, laminate sheet, bidirectional woven fabric, or multiaxial woven fabric substrate is used, a fiber-reinforced composite material with even better mechanical properties can be obtained; therefore, this is preferable. The thickness of the sheet-shaped reinforcing fiber substrate is preferably 0.01

to 3 mm, and more preferably 0.1 to 1.5 mm.

(1-2) Thermoplastic Resin Composition

The thermoplastic resin composition used in the invention contains 50 mass% or more of polyetherketoneketone (PEKK) based on the total thermoplastic resin contained in the resin composition.

Polyetherketoneketone (PEKK) can be produced by a known method, such as a copolymerization reaction by combining a dihalogenated acyl aromatic compound with diaryl ether, for example (e.g., see US Pat. No. 3,065,205, US Pat. No. 3,441,538, US Pat. No. 3,442,857, US Pat. No. 3,516,966, US Pat. No. 4,704,448, US Pat. No. 4,816,556, and US Pat. No. 6,177,518, etc.). In addition, commercially available products can also be used. As commercially available PEKK resins, for example, "Kepstan" manufactured by Arkema, "GAPEKK" manufactured by Gharda Chemicals, and the like can be mentioned.

The PEKK resin used in the invention is preferably such that the content ratio (T/I ratio) of terephthaloyl moieties (T) to isophthaloyl moieties (I) contained in the structure is 60/40 to 100/0. When the T/I ratio is within this range, the PEKK can crystallize, and thus a fiber-reinforced composite material with even better mechanical properties can be obtained; therefore, this is preferable. The T/I ratio is more preferably 65/35 to 75/25. The T/I ratio can be adjusted, for example, with the relative amounts of dihalogenated terephthaloyl and dihalogenated isophthaloyl to be subjected to the copolymerization reaction during production.

In addition, the PEKK resin used in the invention is, as described above, such a PEKK resin that of all arylene ether ketone structural units represented by the following chemical formula (I), the proportion of structural isomers in which the ether group is attached to Ar in the ortho-position relative to the ketone group is 1.6% or less.

[Chemical Formula 3]

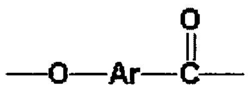

· · · (I)

(In the formula, Ar represents an optionally substituted arylene group).

In addition, in the PEKK resin, of all arylene ether ketone structural units represented by chemical formula (I), the proportion of structural isomers in which the ether group is attached to Ar in the para-position relative to the ketone group is preferably 90% or more, and more preferably 95% or more. Of all arylene ether ketone structural units represented by chemical formula (I), the proportion of structural isomers in which the ether group is attached to Ar in the meta-position relative to the ketone group is not particularly limited, but is preferably 5% or less, and more preferably 0.01 to 3%.

In the invention, the thermoplastic resin composition needs to contain 50 mass% or more of PEKK based on the total thermoplastic resin contained in the resin composition, and may also contain other thermoplastic resins besides the PEKK resin. The non-PEKK thermoplastic resins used in the invention are not particularly limited, but crystalline or amorphous thermoplastic resins having a melting point or glass transition temperature of 150°C or more are preferable. As specific examples of preferred resins, polyaryletherketones (PAEKs) such as polyetheretherketone (PEEK) and polyetherketone (PEK), polypropylene, polysulfone, polyethersulfone, polyphenylene sulfide, aromatic or aliphatic polyamide, aromatic polyester, aromatic polycarbonate, polyetherimide, polyarylene oxide, thermoplastic polyimide, polyamideimide, and the like can be mentioned. These resins may be used alone, and it is also possible to use two or more kinds together. In addition, copolymers thereof can also be used.

(1-3) Additional Additives

In the thermoplastic resin composition of the invention, additives for imparting desired physical properties can be arbitrarily blended.

The thermoplastic resin composition used in the invention preferably contains 0.001 to 20 mass% of a carbon material based on the total thermoplastic resin composition. When a carbon material is contained within this range based on the total thermoplastic resin composition, the crystallinity of the thermoplastic resin further improves, and a fiber-reinforced composite material having excellent mechanical properties can be obtained. When the carbon material content is too low, the improving effect on the crystallinity of the thermoplastic resin may not be obtained, while when the content is too high, the viscosity during melting may be extremely high, leading to deterioration of the impregnation of the reinforcing fiber substrate with the resin composition. The carbon material content based on the total thermoplastic resin composition is more preferably 0.01 to 15 mass%, still more preferably 0.1 to 10 mass%, particularly preferably 0.3 to 7 mass%, and most preferably 0.6 to 5 mass%.

As carbon materials, fullerenes, carbon black, ketjen black, carbon nanotubes, carbon nanoribbons, carbon nanofibers, carbon fibers, activated carbon, and the like can be mentioned. Among them, carbon black, ketjen black, carbon nanotubes, and activated carbon are suitable for use.

In addition to carbon materials, as additives, for example, inorganic fillers such as talc, mica, kaolin, calcium carbonate, calcium silicate, and boron nitride, electrically conductive particles, antioxidants, light stabilizers, flame retardants, plasticizers, inorganic fillers, internal release agents, and the like may also be contained.

2. Method for Producing Prepreg

The method for producing a thermoplastic resin prepreg of the invention is a method for producing a thermoplastic resin prepreg, including impregnating a reinforcing fiber substrate with the thermoplastic resin composition described above. Hereinafter, the method for producing a thermoplastic resin prepreg will be described in detail.

(2-1) Thermoplastic Resin Composition Production Method

The thermoplastic resin composition used in the invention can be produced by mixing PEKK with other components as necessary. The order of mixing them is not limited.

In the invention, the method for mixing PEKK with other components as necessary is not particularly limited, and conventionally known methods such as a powder mixing method, a solution method, a melt method, and a masterbatch method can be applied. At the time of kneading, a method in which kneading is performed in a solution state or in a melt state is preferable in terms of uniform kneading properties. For the operation of mixing PEKK with other components, a conventionally known kneading apparatus can be used. The kneading apparatus is not particularly limited, and may be a known vertical reactor, mixing tank, or kneading tank, or a single-screw or multi-screw horizontal kneading apparatus, such as a single-screw or multi-screw extruder or kneader, for example.

The melting temperature is appropriately adjusted according to the kind of resin, its mixing ratio, and the presence or type of additives. In terms of productivity and the like, the temperature is preferably 320°C or more, and more preferably 330°C or more. In addition, the temperature is preferably 380°C or less, and more preferably 360°C or less.

In the method for producing a thermoplastic resin prepreg of the invention, before mixing PEKK, the PEKK resin is preferably washed and purified. The method for washing and purification is not particularly limited. For example, a reprecipitation purification method, a Soxhlet extraction method, a stirring washing method in a dispersion system using a solvent, and the like can be mentioned. Among them, because of its high effectiveness in removing aluminum, phosphorus, and sodium, it is more preferable to use a reprecipitation purification method.

The good solvent for PEKK used in the reprecipitation purification method is not particularly limited as long as it is a solvent capable of dissolving PEKK. However, because of its high dissolving power and the ease of acquisition, concentrated sulfuric acid is preferably used. In addition, the poor solvent for PEKK used in the reprecipitation purification method is not particularly limited as long as its PEKK solubility is lower than that of the good solvent. However, because of the ease of handling and acquisition, and also the high PEKK recovery rate after purification, for example, it is preferable to use water or an alcohol.

In the method for producing a thermoplastic resin prepreg of the invention, before mixing PEKK, the PEKK resin is preferably washed and purified. The method for washing and purification is not particularly limited. Specifically, a reprecipitation purification method, a Soxhlet extraction method, a stirring washing method in a dispersion system using a solvent, and the like can be mentioned. Among them, in terms of the high effectiveness in removing structural isomers with ortho-linkages, the ease of operation, the ease of scale-up, and the like, a stirring washing method in a dispersion system using a solvent is suitable for use. The solvent used is not particularly limited. However, because of its high cleaning power and the ease of acquisition, a solvent selected from alcohols and carbon halides is preferably used. Examples of suitable alcohols include methanol, ethanol, and 2-propanol. In addition, as carbon halides suitable for use, dichloromethane, chloroform, and 1,2-dichloroethane can be mentioned.

(2-2) Prepreg Production Method

The prepreg production method in the invention is not particularly limited, and any of conventionally known methods can be employed. Specific examples thereof include a method in which a reinforcing fiber substrate is heat-fused to a film composed of a thermoplastic resin composition (hot melt method), a method in which a reinforcing fiber substrate is immersed in a solution or emulsion of a thermoplastic resin, dried, and then melted, a method in which a reinforcing fiber substrate is passed through a bed of a thermoplastic resin powder to attach the power thereto, followed by fusion by heating, and a method in which a reinforcing fiber substrate is immersed in a suspension solution of a thermoplastic resin powder to attach the thermoplastic resin powder to the substrate, followed by melting by heating (powder suspension method). Among them, a powder suspension method is preferably used because the thermoplastic

resin can be impregnated uniformly into the reinforcing fiber.

In the case of using a hot melt method, the method for forming the thermoplastic resin composition into a resin composition film is not particularly limited, and any of conventionally known methods can be used. Specifically, the resin composition can be cast on a support such as a release paper or a film using die extrusion, an applicator, a reverse roll coater, a comma coater, or the like, thereby giving a resin composition film. The resin temperature at the time of film production is appropriately determined according to the composition or viscosity of the resin composition. The heat-fusion of the resin composition to the reinforcing fiber substrate and its impregnation into the fiber layer may be performed at once, or at multistep operations.

In a powder suspension method, the thermoplastic resin composition is used in powder form. Considering excellent deposition on the reinforcing fiber substrate (the state in which the resin powder is retained between fibers or on the fiber surface), the particle size of the thermoplastic resin powder is 50 μm or less, and, in terms of handleability, desirably not less than 1 μm. The average particle size is more preferably within a range of 5 to 50 μm. When dispersed in the liquid described below, a thermoplastic resin powder within the above particle size range has stable dispersibility (dispersibility of the resin powder in a suspension), allowing the resin powder to be stably deposited on the reinforcing fiber substrate even through long-term production. Incidentally, the above average particle size refers to the value of the cumulative 50 vol% particle size ($D_{50}$) in the particle size distribution measured using the laser diffraction/scattering method.

In the powder suspension method, it is preferable to use a liquid for dispersing the thermoplastic resin powder. The liquid used is preferably at least one solvent selected from water, alcohols, ketones, and halogenated carbon hydrogens or a mixed solvent thereof. As alcohols, methanol, ethanol, isopropyl alcohol, methyl cellosolve, and the like can be mentioned. As ketones, acetone, methyl ethyl ketone, and the like can be mentioned. As halogenated hydrocarbons, methylene chloride, dichloroethane, and the like can be mentioned. Among them, ethanol, isopropyl alcohol, acetone, a mixed solvent thereof with water, and water are preferable. In addition, it is also possible to use a commercially available product containing the above solvent and having a suitable solvent composition. An example of such a commercially available product is SOLMIX (product name, manufactured by Japan Alcohol Trading Co., Ltd.). Such a liquid also functions to moderately spread the reinforcing fiber substrate, and thus is effective in uniformly depositing the resin powder in the suspension on the fiber substrate.

The combination of a thermoplastic resin powder and a liquid (solvent) for dispersing the same is preferably such that the solvent is a poor solvent for the thermoplastic resin, and preferably does not dissolve the thermoplastic resin.

The concentration of the thermoplastic resin in the suspension [thermoplastic resin mass/(liquid mass + thermoplastic resin mass) × 100] is preferably 1 to 50 mass%, more preferably 1 to 30 mass%, and still more preferably 1 to 15 mass%.

The temperature of the suspension upon immersion of the reinforcing fiber substrate is not particularly limited as long as the dispersion state of the resin is kept excellent, and also varies depending on the kind or concentration of the thermoplastic resin or liquid used, but is usually 5 to 50°C, preferably 5 to 30°C, and still more preferably 15 to 30°C.

The amount of thermoplastic resin powder attached to the reinforcing fiber substrate is preferably 10 to 70 mass% based on the total amount of the reinforcing fiber and the thermoplastic resin powder. For the production of a prepreg, 20 to 50 mass% is more preferable.

Such a reinforcing fiber substrate having attached thereto a thermoplastic resin powder is usually dried at a temperature at which the thermoplastic resin does not decompose or react. The drying temperature is preferably 80 to 200°C, and, for production, the drying time is preferably 1 to 20 minutes.

The reinforcing fiber substrate having attached thereto a thermoplastic resin powder is heated at a temperature not lower than the glass transition temperature or melting point of the thermoplastic resin composition. As a result of this treatment, the thermoplastic resin powder is softened or melted, and the reinforcing fiber and the thermoplastic resin composition are integrated, whereby a thermoplastic resin prepreg is obtained. The method for heating the reinforcing fiber substrate having attached thereto a thermoplastic resin powder is not particularly limited, and it is possible to use a heating roller, a heating slit, a thermal press, a dryer, or the like.

According to the method for producing a thermoplastic resin prepreg of the invention as described above, a thermoplastic resin prepreg that gives a fiber-reinforced composite material with excellent mechanical strength even through molding at a low temperature within a short period of time can be obtained.

3. Fiber-Reinforced Composite Material

The fiber-reinforced composite material of the invention is a fiber-reinforced composite material including at least a reinforcing fiber substrate and the above thermoplastic resin composition. The method for molding the fiber-reinforced composite material of the invention is not particularly limited. For example, molding methods with excellent productivity such as injection molding, autoclave molding, press molding, filament winding molding, stamping molding, and the like can be mentioned, and they can be used in combination. It is preferable that the fiber-reinforced composite

material is molded using the prepreg of the invention.

The fiber-reinforced composite material of the invention can be molded at low cost and also has excellent mechanical strength, and thus is suitable for application to automobiles, aircrafts, electrical/electronic devices, sports/leisure goods, and the like. Among them, the fiber-reinforced composite material of the invention is particularly suitable for use as a member in the aerospace field and the like.

When the thermoplastic resin prepreg of the invention as described above is used, even through molding at a low temperature within a short period of time, a fiber-reinforced composite material with excellent mechanical strength can be obtained.

Examples

Hereinafter, the invention will be described in further detail with reference to examples, but the invention is not limited to the examples. The components of the resin compositions used in the examples and comparative examples and the evaluation methods will be described below.

[Components]

(PEKK Resin)

PEKK-1A: PEKK resin particles, Kepstan PT7002 (product name), Tm = 334.0°C, reduced viscosity: 100.2 $cm^3/g$, T/I ratio = 70/30, manufactured by Arkema
PEKK-1B: PEKK resin particles, Kepstan 7003 (product name), Tm = 331.0°C, reduced viscosity: 83.9 $cm^3/g$, T/I ratio = 70/30, manufactured by Arkema
PEKK-2A: PEKK resin obtained below in Production Example 1, Tm = 399.7°C, reduced viscosity: 43.4 $cm^3/g$, T/I ratio = 100/0
PEKK-2B: PEKK resin obtained below in Production Example 2, Tm = 214.3°C, reduced viscosity: 3.6 $cm^3/g$, T/I ratio = 100/0
PEKK-2C: PEKK resin particles, GAPEKK 8-3200P (product name), Tm = 367.0°C, reduced viscosity: 121.8$cm^3/g$, T/I ratio = 80/20, manufactured by Gharda Chemicals

[Production Example 1] Production of PEKK-2A

Into a reaction vessel equipped with a stirrer, 125 ml of 1,2-dichloroethane, 1.70 g (0.010 mol) of diphenyl ether, and 2.03 g (0.010 mol) of terephthalic acid chloride were charged, stirred into a homogeneous solution, and cooled in an ice bath until the internal temperature became -5°C or less. After cooling to -5°C or less, 3.72 g (0.028 mol) of aluminum chloride was added to this solution, and heated until the internal temperature became room temperature (about 20°C) over about 2 hours. After the internal temperature reached room temperature, stirring was continued for 6 hours. The obtained reaction solution was added to ice water, and the resulting solid was recovered by filtration. The obtained solid was reflux-washed with methanol overnight and filtered, thereby giving the target PEKK-2A.

[Production Example 2] Production of PEKK-2B

Into a reaction vessel equipped with a stirrer, 600 ml of 1,2-dichloroethane and 20.3 g (0.12 mol) of diphenyl ether were charged, stirred into a homogeneous solution, and cooled in an ice bath until the internal temperature became -5°C or less. After cooling to -5°C or less, 17.8 g (0.13 mol) of aluminum chloride and 9.70 g (0.048 mol) of terephthalic acid chloride were added to this solution, and heated until the internal temperature became room temperature (about 20°C) over about 2 hours. After the internal temperature reached room temperature, stirring was continued for 6 hours. The obtained reaction solution was added to ice water, and the resulting solid was recovered by filtration. The obtained solid was reflux-washed with methanol overnight and filtered, thereby giving the target PEKK-2B.

(Other PAEK Resins)

PEEK-1: Polyetheretherketone (PEEK) resin, VESTAKEEP 1000G (product name), Tm = 345.6°C, reduced viscosity: 64.7$cm^3/g$, manufactured by Daicel-Evonik Ltd.

PEEK-2: PEEK resin, VESTAKEEP 2000G (product name), Tm = 343.8°C, reduced viscosity: 71.4 $cm^3/g$, manufactured by Daicel-Evonik Ltd.

(Reinforcing Fiber)

Carbon fiber: TENAX® HTS45 P12 12K 800 tex, the number of filaments: 12,000, tensile strength: 4,500 MPa, tensile elastic modulus: 240 GPa, manufactured by Teijin Limited

[Evaluation Methods]

(1) Melting Point, Crystallization Enthalpy, Cooling Crystallization Temperature

A sample was taken from the obtained resin composition and subjected to DSC measurement under the following conditions using, as a differential scanning calorimeter (DSC), a differential scanning calorimeter Q2000 manufactured by TA Instruments.
As the melting point (Tm), the value of the peak top of an endothermic peak appearing on the DSC chart during the heating process under the following measurement conditions was read. In the case where two or more peaks were present, among such peaks, the value of the peak top with the greatest height from the baseline was taken as the melting point.
As the cooling crystallization temperature (Tcd), the value of the peak top of an endothermic peak observed during the cooling process under the following measurement conditions was read. In the case where two or more peaks were present, among such peaks, the value of the peak top with the greatest height from the baseline was taken as the cooling crystallization temperature.
The crystallization enthalpy (ΔHcd) was calculated by integrating the peak having the highest peak top value observed during the cooling process.

Measurement Conditions

Atmosphere: Nitrogen atmosphere
Heating conditions

Heating rate: 10°C/min
Temperature range: From 30°C to 400°C

Cooling conditions

Cooling rate: 50°C/min
Temperature range: From 400°C to 30°C

After heating (after 400°C was reached), the temperature was held for 1 minute, and then cooling was started.

(2) Reduced Viscosity (ηsp/C)

The reduced viscosity of each component was measured and calculated under the following conditions.

Viscometer: Ostwald-type viscometer
Solvent: Sulfuric acid (manufactured by FUJIFILM Wako Pure Chemical Corporation, for precision analysis)
Sample concentration: 0.001 $g/cm^3$ (sample mass/sulfuric acid volume)
Measurement temperature: 30°C
ηsp/C calculation formula: $\eta sp/C = [(t/t_0) - 1]/C$

t: Sample solution passage time (sec)
$t_0$: Solvent passage time (sec)
C: Solution concentration ($g/cm^3$)

(3) Element Content

The aluminum, phosphorus, and sodium contents in the PEKK resin were measured by elemental analysis by ICP optical emission spectrometry.

0.5 g of a PEKK sample was carbonized with an electric heater and then incinerated in an electric furnace at 750°C. The incinerated sample was dried with hydrochloric acid and then dissolved in hydrochloric acid. Then, using a 50-ml measuring flask, the obtained solution was diluted with pure water to prepare a test solution, and the content of each component was measured by ICP optical emission spectrometry. As the apparatus for ICP optical emission spectrometry, a multi-type ICP optical emission spectrometer Agilent 5100 ICP-OES manufactured by Agilent Technologies, Inc., was used.

(4) Ratio of Arylene Ether Ketone Structural Isomers

The ratio of structural isomers of the arylene ether ketone structure in the PEKK resin was calculated by proton nuclear magnetic resonance ($^1$H-NMR) measurement. Using an NMR apparatus (JNM-ECA600 manufactured by JEOL Ltd.) as the measuring apparatus, 10 mg of a PEKK sample was dissolved in 0.6 ml of a mixed solvent of deuterotrifluoroacetic acid: deuterochloroform = 1:1, and $^1$H-NMR was measured at room temperature.

From the obtained spectrum, the structural isomer ratio was calculated in accordance with the following calculation method. Incidentally, from the obtained spectrum, peaks derived from the hydrogens described in the following chemical formulas (II) to (IV) were assigned with reference to "Polymer, vol. 38, No. 14, p. 3441, 1997".

[Chemical Formula 4]

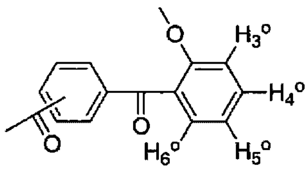

・・・(I I)

[Chemical Formula 5]

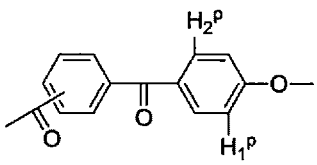

・・・(I I I)

[Chemical Formula 6]

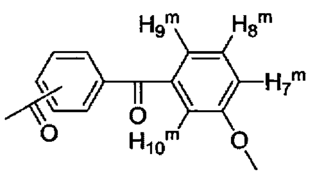

・・・(I V)

The ratio of structural isomers with ortho-linkages = $S^o/(S^o + S^p + S^m)$

The ratio of structural isomers with meta-linkages = $S^m/(S^o + S^p + S^m)$

$$\text{The ratio of structural isomers with para-linkages} = S^p/(S^o + S^p + S^m)$$

$S^o$: Value obtained by dividing the sum of the integral value of the peak assigned to $H_4{}^o$ at a chemical shift of 7.2 ppm and the integral value of the peak assigned to $H_5{}^o$ at 7.5 ppm by 2.
$S^p$: Value obtained by dividing the integral value assigned to $H_1{}^p$, which is obtained by subtracting the integral value of the peaks assigned to chloroform and $H_3{}^o$ from the integral value of peaks at chemical shifts of 7.3 to 7.4 ppm, by 2.
$S^m$: Integral value of the peak assigned to $H_7{}^m$ at a chemical shift of 7.0 ppm.

(5) Average Particle Size

The average particle size was determined using a laser diffraction/scattering particle size analyzer Microtrac manufactured by Nikkiso Co., Ltd. The particle size distribution [cumulative 10 vol% particle size ($D_{10}$), cumulative 50 vol% particle size ($D_{50}$), cumulative 90 vol% particle size ($D_{90}$)] was measured, and the cumulative 50 vol% particle size ($D_{50}$) was taken as the average particle size.

(6) Interlayer Shear Strength (ILSS)

The obtained prepreg was cut into a square of 100 mm in the 0° direction and 100 mm in the 90° direction, and then ten such squares were laminated with the fiber orientation directions being the same. This laminate was placed in a press machine set at 385°C, press-molded for 5 minutes under a pressure of 2 MPa, and then allowed to cool at room temperature, thereby preparing a molded plate of a carbon fiber-reinforced thermoplastic resin composite material having a thickness of 2 mm. From the prepared molded plate, a test piece having a length of 14 mm in the 0° direction and measuring 10 mm in the 90° direction was cut out, thereby giving a test piece for ILSS measurement. The ILSS was measured and calculated in accordance with JIS K 7078.
It is preferable that the interlayer shear strength (ILSS) of a fiber-reinforced composite material is 75 MPa or more, more preferably 85 MPa or more, and particularly preferably 95 to 150 MPa.

(Example 1)

PEKK-1A (100 parts by mass) and PEKK-2A (1 part by mass) were melt-kneaded at 380°C to give a chip-shaped thermoplastic resin composition. The DSC measurement results of the obtained thermoplastic resin composition are shown in Table 1. Then, the obtained thermoplastic resin composition chips were pulverized to give a thermoplastic resin composition powder having an average particle size of 20 μm. The obtained powder was dispersed in a mixed solvent SOLMIX AP-7 (product name, ethanol-based mixed solvent, manufactured by Japan Alcohol Trading Co. Ltd.) to prepare a suspension solution having a concentration of 5.5 mass%.
As a reinforcing fiber substrate, 55 carbon fibers were aligned in parallel to form a sheet, thereby preparing a carbon fiber alignment sheet having a carbon fiber areal weight of 194 g/$m^2$. Two obtained reinforcing fiber substrates were introduced into a suspension bath filled with the above suspension and immersed for 15 seconds. The two substrates were then laminated and led out as one laminate sheet from the suspension bath. The obtained laminate sheet was dried at 150°C for 5 minutes.
Subsequently, the laminate sheet was passed through a roller having a surface temperature of 380°C to melt the resin and impregnate the sheet therewith, thereby giving a thermoplastic resin prepreg. The obtained prepreg had a resin content of 35 mass%. A composite material was produced using the prepreg thus obtained, and its interlayer shear strength (ILSS) was measured. The measurement results are shown in Table 1.
The composite material obtained in Example 1 had an ILSS of 110 MPa and exhibited excellent physical properties.

(Examples 2 to 6)

Thermoplastic resin compositions and thermoplastic resin prepregs were obtained in the same manner as in Example 1, except that the PEKK resin was changed to the component compositions shown in Table 1. The DSC measurement results of the obtained thermoplastic resin compositions and the ILSS measurement results of composite materials obtained using the prepregs are shown in Table 1. The composite materials obtained in Examples 2 to 6 all exhibited excellent physical properties.

(Comparative Examples 1 to 5)

Thermoplastic resin compositions and thermoplastic resin prepregs were prepared by the same operation as in Example 1, except that the component composition of each thermoplastic resin composition was changed to the composition shown in Table 1. The DSC measurement results of the obtained thermoplastic resin compositions and the ILSS measurement results of composite materials obtained using the prepregs are shown in Table 1. The ILSSs of the composite materials obtained in Comparative Examples 1 to 5 were lower than in the examples, and the physical properties were insufficient.

[Table 1]

| | | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|---|
| Composition of Resin Composition | Component | | Reduced Viscosity cm$^3$/g | | | | | | | | | | | |
| | First PEKK | PEKK-1A | 100.2 | 100 | 100 | - | - | 100 | 100 | 100 | - | 100 | 100 | 100 |
| | | PEKK-1B | 83.9 | - | - | 100 | 100 | - | - | - | 100 | - | - | - |
| | Second PEKK | PEKK-2A | 43.4 | 1 | - | 1 | 0.1 | 0.01 | 0.001 | - | - | - | - | - |
| | | PEKK-2B | 3.6 | - | 1 | - | - | - | - | - | - | - | - | - |
| | | PEKK-2C | 121.8 | - | - | - | - | - | - | - | - | 1 | - | - |
| | Other PAEK | PEEK-1 | 64.7 | - | - | - | - | - | - | - | - | - | 1 | - |
| | | PEEK-2 | 71.4 | - | - | - | - | - | - | - | - | - | - | 1 |
| Resin Composition Physical Properties | DSC | Tm °C | - | 334.0 | 333.1 | 335.0 | 333.4 | 333.7 | 332.3 | 331.1 | 331.0 | 333.6 | 333.6 | 333.4 |
| | | ΔHcd J/g | - | 36.2 | 27.9 | 35.9 | 32.5 | 33.0 | 28.9 | 12.7 | 21.5 | 11.8 | 19.5 | 18.2 |
| | | Tcd °C | - | 267.5 | 236.7 | 274.4 | 267.5 | 245.7 | 234.4 | 229.6 | 245.7 | 226.5 | 229.9 | 231.2 |
| Composite Material Physical Properties | ILSS | MPa | - | 110 | 90 | 110 | 94 | 87 | 80 | 65 | 72 | 66 | 70 | 68 |

(Example 7)

To 1 part by mass of PEKK-1A, 50 parts by mass of sulfuric acid (manufactured by FUJIFILM Wako Pure Chemical Corporation) was added and dissolved, and the obtained homogeneous solution was slowly added dropwise to 750 parts by mass of distilled water (manufactured by FUJIFILM Wako Pure Chemical Corporation). The solid precipitated here was recovered and dried to give reprecipitated, purified PEKK. The obtained purified PEKK was non-uniform in shape and size. The reduced viscosity, the aluminum, phosphorus, and sodium contents, and the DSC of the PEKK resin after purification were measured. The results are shown in Table 2.

The purified PEKK was melt-kneaded at 380°C to prepare thermoplastic resin composition chips, and the chips were further pulverized, thereby giving a thermoplastic resin composition powder having an average particle size of 20 μm. The obtained powder was dispersed in a mixed solvent SOLMIX AP-7 (product name, ethanol-based mixed solvent, manufactured by Japan Alcohol Trading Co. Ltd.) to prepare a suspension solution having a concentration of 5.5 mass%.

As a reinforcing fiber substrate, 55 carbon fibers were aligned in parallel to form a sheet, thereby preparing a carbon fiber alignment sheet having a carbon fiber areal weight of 194 g/m$^2$. Two obtained reinforcing fiber substrates were introduced into a suspension bath filled with the suspension solution and immersed for 15 seconds. The two substrates were then laminated and led out as one laminate sheet from the suspension bath. The obtained laminate sheet was dried at 150°C for 5 minutes.

Subsequently, the laminate sheet was passed through a roller having a surface temperature of 380°C to melt the resin and impregnate the sheet therewith, thereby giving a thermoplastic resin prepreg. The obtained prepreg had a resin content of 35 mass%. A composite material was produced using the prepreg thus obtained, and its interlayer shear strength (ILSS) was measured. The measurement results are shown in Table 2.

The composite material obtained in Example 7 had an ILSS of 97 MPa and exhibited excellent physical properties.

(Example 8)

A thermoplastic resin composition powder and a thermoplastic resin prepreg were prepared by the same operation as in Example 7, except for using PEKK-1B. The reduced viscosity, the aluminum, phosphorus, and sodium contents, and the DSC of the PEKK resin after purification were measured. The results are shown in Table 2.

A composite material was produced using the obtained thermoplastic resin prepreg, and its ILSS was measured. The ILSS measurement results are shown in Table 2. The composite material obtained in Example 8 had an ILSS of 103 MPa and exhibited excellent physical properties.

(Comparative Example 6)

A thermoplastic resin composition powder and a prepreg were prepared by the same operation as in Example 7, except that the PEKK resin was not purified. The reduced viscosity, the aluminum, phosphorus, and sodium contents, and the DSC of the used PEKK resin were measured. The results are shown in Table 2.

A composite material was produced using the obtained thermoplastic resin prepreg, and its ILSS was measured. The measurement results are shown in Table 2. The composite material obtained in Comparative Example 6 had an ILSS of 65 MPa, and the physical properties were insufficient.

(Comparative Example 7)

A thermoplastic resin composition powder and a thermoplastic resin prepreg were prepared by the same operation as in Example 8, except that the PEKK resin was not subjected to a purification treatment. The reduced viscosity, the aluminum, phosphorus, and sodium contents, and the DSC of the used PEKK resin were measured. The results are shown in Table 2.

A composite material was produced using the obtained thermoplastic resin prepreg, and its ILSS was measured. The measurement results are shown in Table 2. The composite material obtained in Comparative Example 7 had an ILSS of 72 MPa, and the physical properties were insufficient.

[Table 2]

| | | | | Example 7 | Example 8 | Comparative Example 6 | Comparative Example 7 |
|---|---|---|---|---|---|---|---|
| PEKK Resin Physical Properties | Resin | | | PEKK-1A | PEKK-1B | PEKK-1A | PEKK-1B |
| | Purification Treatment | | | Present | Present | Absent | Absent |
| | Reduced Viscosity | | $cm^3/g$ | 104.0 | 81.7 | 100.2 | 83.9 |
| | Element Content | Al | ppm | 3.9 | 3.9 | 115.3 | 50.0 |
| | | Na | ppm | 1.2 | 0.9 | 367.8 | 68.0 |
| | | P | ppm | 0.5 | 7.3 | 536.9 | <1 |
| | | Total amount of Al, Na, P | ppm | 5.6 | 12.1 | 1020.0 | 118.0 |
| | DSC | Tm | °C | 334.3 | 333.6 | 331.1 | 331.0 |
| | | ΔHcd | J/g | 31.3 | 33.6 | 12.7 | 21.5 |
| Composite Material Physical Properties | ILSS | | MPa | 97 | 103 | 65 | 72 |

(Example 9)

100 parts by mass of chloroform (manufactured by FUJIFILM Wako Pure Chemical Corporation) was added to 1 part by mass of PEKK-1A, and the obtained dispersion was stirred under reflux conditions for about 3 hours. After cooling, the dispersion was filtered to give a PEKK powder. The obtained PEKK powder was washed again with chloroform in the same manner as above, then filtered, and dried, thereby giving a purified thermoplastic resin composition powder having an average particle size of 20 μm. The reduced viscosity, the structural isomer ratio, and the DSC of the PEKK resin after purification were measured. The results are shown in Table 3.

The obtained thermoplastic resin powder was dispersed in a mixed solvent SOLMIX AP-7 (product name, ethanol-based mixed solvent, manufactured by Japan Alcohol Trading Co. Ltd.) to prepare a suspension solution having a concentration of 5.5 mass%.

Then, as a reinforcing fiber substrate, 55 carbon fibers were aligned in parallel to form a sheet, thereby preparing a carbon fiber alignment sheet having a carbon fiber areal weight of 194 $g/m^2$. Two obtained reinforcing fiber substrates were introduced into a suspension bath filled with the above suspension solution and immersed for 15 seconds. The two substrates were then laminated and led out as one laminate sheet from the suspension bath. The obtained laminate sheet was dried at 150°C for 5 minutes.

Subsequently, the laminate sheet was passed through a roller having a surface temperature of 380°C to melt the resin and impregnate the sheet therewith, thereby giving a thermoplastic resin prepreg. The obtained prepreg had a resin content of 35 mass%. A composite material was produced using the prepreg thus obtained, and its interlayer shear strength (ILSS) was measured. The measurement results are shown in Table 3.

The composite material obtained in Example 9 had an ILSS of 90 MPa and exhibited excellent physical properties.

(Example 10)

A thermoplastic resin composition powder and a thermoplastic resin prepreg were prepared by the same operation as in Example 9, except for using PEKK-1B. The reduced viscosity, the structural isomer ratio, and the DSC of the PEKK resin after purification were measured. The results are shown in Table 3.

A composite material was produced using the obtained thermoplastic resin prepreg, and its ILSS was measured. The ILSS measurement results are shown in Table 3. The composite material obtained in Example 10 had an ILSS of 92 MPa and exhibited excellent physical properties.

(Comparative Example 8)

A thermoplastic resin composition powder and a thermoplastic resin prepreg were prepared by the same operation as in Example 9, except that the PEKK resin was not subjected to a purification treatment. The reduced viscosity, the structural isomer ratio, and the DSC of the PEKK resin after purification were measured. The results are shown in Table 3.

A composite material was produced using the obtained thermoplastic resin prepreg, and its ILSS was measured. The ILSS measurement results are shown in Table 3. The composite material obtained in Comparative Example 8 had an ILSS of 65 MPa, and the physical properties were insufficient.

(Comparative Example 9)

A thermoplastic resin composition powder and a thermoplastic resin prepreg were prepared by the same operation as in Example 10, except that the PEKK resin was not subjected to a purification treatment. The reduced viscosity, the structural isomer ratio, and the DSC of the PEKK resin after purification were measured. The results are shown in Table 3.

A composite material was produced using the obtained thermoplastic resin prepreg, and its ILSS was measured. The ILSS measurement results are shown in Table 3. The composite material obtained in Comparative Example 9 had an ILSS of 72 MPa, and the physical properties were insufficient.

[Table 3]

| | | | | Example 9 | Example 10 | Comparative Example 8 | Comparative Example 9 |
|---|---|---|---|---|---|---|---|
| PEKK Resin Physical Properties | Resin | | | PEKK-1A | PEKK-1B | PEKK-1A | PEKK-1B |
| | Purification Treatment | | | Present | Present | Absent | Absent |
| | Reduced Viscosity | | $cm^3/g$ | 106.1 | 82.6 | 100.2 | 83.9 |
| | Arylene Ether Ketone Structural Isomer Ratio | Ortho | % | 1.4 | 1.0 | 2.4 | 1.7 |
| | | Meta | % | 1.0 | 1.0 | 1.0 | 1.1 |
| | | Para | % | 97.6 | 98.0 | 96.6 | 97.2 |
| | DSC | Tm | °C | 334.3 | 333.6 | 331.1 | 331.0 |
| | | ΔHcd | J/g | 27.8 | 28.9 | 12.7 | 21.5 |
| Composite Material Physical Properties | ILSS | | MPa | 90 | 92 | 65 | 72 |

(Example 11)

To 1 part by mass of PEKK-1A, 50 parts by mass of sulfuric acid (manufactured by FUJIFILM Wako Pure Chemical Corporation) was added and dissolved, and the obtained homogeneous solution was slowly added dropwise to 750 parts by mass of distilled water (manufactured by FUJIFILM Wako Pure Chemical Corporation). The solid precipitated here was recovered and dried to give reprecipitated, purified PEKK. Then, 100 parts by mass of chloroform (manufactured by FUJIFILM Wako Pure Chemical Corporation) was added to 1 part by mass of PEKK-1A after purification with sulfuric acid, and the obtained dispersion was stirred under reflux conditions for about 3 hours. After cooling, the dispersion was filtered to give a PEKK powder. The obtained PEKK powder was washed again with chloroform in the same manner as above, then filtered, and dried to give a purified PEKK-1A powder. The reduced viscosity of the PEKK resin after purification was 106.3 $cm^3/g$, and the element contents were as follows: aluminum: 4.0 ppm, phosphorus: 0.4 ppm, sodium: 1.3 ppm. In addition, the structural isomer ratio was as follows: ortho: 1.3%, meta: 1.0%, para: 97.7%.

Then, PEKK-1A (100 parts by mass) purified with sulfuric acid and chloroform and PEKK-2A (1 part by mass) were melt-kneaded at 380°C to give a chip-shaped thermoplastic resin composition. The obtained thermoplastic resin composition was subjected to DSC measurement. As a result, the thermoplastic resin composition had a melting point (Tm) of 334.2°C, a crystallization enthalpy (ΔHcd) of 32.8 J/g, and a cooling crystallization temperature of 285.4°C.

Then, the obtained thermoplastic resin composition chips were pulverized to give a thermoplastic resin composition powder having an average particle size of 20 μm. The obtained powder was dispersed in a mixed solvent SOLMIX AP-7 (product name, ethanol-based mixed solvent, manufactured by Japan Alcohol Trading Co. Ltd.) to prepare a suspension solution having a concentration of 5.5 mass%.

As a reinforcing fiber substrate, 55 carbon fibers were aligned in parallel to form a sheet, thereby preparing a carbon fiber alignment sheet having a carbon fiber areal weight of 194 $g/m^2$. Two obtained reinforcing fiber substrates were introduced into a suspension bath filled with the above suspension and immersed for 15 seconds. The two substrates were then laminated and led out as one laminate sheet from the suspension bath. The obtained laminate sheet was dried at 150°C for 5 minutes.

Subsequently, the laminate sheet was passed through a roller having a surface temperature of 380°C to melt the resin and impregnate the sheet therewith, thereby giving a thermoplastic resin prepreg. The obtained prepreg had a resin content of 35 mass%. A composite material was produced using the prepreg thus obtained, and its interlayer shear strength (ILSS) was measured. The composite material obtained in Example 11 had an ILSS of 115 MPa and exhibited excellent physical properties.

Citation List

Patent Literature

PTL 1: JP-A-2017-149804

## Claims

1. A thermoplastic resin prepreg comprising at least a reinforcing fiber substrate and a thermoplastic resin composition partially or completely impregnated in the reinforcing fiber substrate,
   the thermoplastic resin prepreg being **characterized in that** the thermoplastic resin composition contains 50 mass% or more of polyetherketoneketone (PEKK) based on the total thermoplastic resin contained in the resin composition, and is a thermoplastic resin composition having a crystallization enthalpy of 22 J/g or more as measured by a differential scanning calorimeter (DSC) at a cooling rate of 50°C/min from 400°C.

2. A thermoplastic resin prepreg comprising at least a reinforcing fiber substrate and a thermoplastic resin composition partially or completely impregnated in the reinforcing fiber substrate,
   the thermoplastic resin prepreg being **characterized in that** the thermoplastic resin composition contains 50 mass% or more of polyetherketoneketone (PEKK) based on the total thermoplastic resin contained in the resin composition, and the PEKK includes a first PEKK and a second PEKK having a lower reduced viscosity than the first PEKK.

3. The thermoplastic resin prepreg according to claim 2, wherein the reduced viscosities of the first PEKK and the second PEKK satisfy the following formulas (1) and (2):

$$50\ cm^3/g \leq \text{reduced viscosity of the first PEKK} \leq 200\ cm^3/g$$

... formula (1)

$$2\ cm^3/g \leq \text{reduced viscosity of the second PEKK} \leq 100\ cm^3/g$$

... formula (2).

4. The thermoplastic resin prepreg according to claim 2 or 3, wherein the mass ratio of the first PEKK to the second PEKK is 99.9995/0.0005 to 50/50.

5. A thermoplastic resin prepreg comprising at least a reinforcing fiber substrate and a thermoplastic resin composition partially or completely impregnated in the reinforcing fiber substrate,

   the thermoplastic resin prepreg being **characterized in that**
   the thermoplastic resin composition contains 50 mass% or more of polyetherketoneketone (PEKK) based on

the total thermoplastic resin composition, and
the total amount of aluminum, phosphorus, and sodium contained in the PEKK is 100 ppm or less.

**6.** The prepreg according to claim 5, wherein the amount of aluminum contained in the PEKK is 45 ppm or less.

**7.** A thermoplastic resin prepreg comprising at least a reinforcing fiber substrate and a thermoplastic resin composition partially or completely impregnated in the reinforcing fiber substrate,

the thermoplastic resin prepreg being **characterized in that**
the thermoplastic resin composition contains 50 mass% or more of polyetherketoneketone (PEKK) based on the total thermoplastic resin composition, and,
of all arylene ether ketone structural units represented by the following chemical formula (I) contained in the PEKK, the proportion of structural isomers in which the ether group is attached to Ar in the ortho-position relative to the ketone group is 1.6% or less:

[Chemical Formula 1]

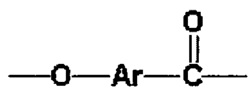 · · · (I)

(wherein Ar represents an optionally substituted arylene group) .

**8.** The thermoplastic resin prepreg according to any one of claims 2 to 7, wherein the thermoplastic resin composition is a thermoplastic resin composition having a crystallization enthalpy of 22 J/g or more as measured by a differential scanning calorimeter (DSC) at a cooling rate of 50°C/min from 400°C.

**9.** A method for producing a thermoplastic resin prepreg, comprising impregnating a reinforcing fiber substrate with a thermoplastic resin composition,
the method for producing a prepreg being **characterized in that** the thermoplastic resin composition contains 50 mass% or more of polyetherketoneketone (PEKK) based on the total thermoplastic resin contained in the resin composition, and is a thermoplastic resin composition having a crystallization enthalpy of 22 J/g or more as measured by a differential scanning calorimeter (DSC) at a cooling rate of 50°C/min from 400°C.

**10.** A method for producing a thermoplastic resin prepreg, comprising impregnating a reinforcing fiber substrate with a thermoplastic resin composition,
the method for producing a thermoplastic resin prepreg being **characterized in that** the thermoplastic resin composition contains 50 mass% or more of polyetherketoneketone (PEKK) based on the total thermoplastic resin contained in the resin composition, and the PEKK includes a first PEKK and a second PEKK having a lower reduced viscosity than the first PEKK.

**11.** A method for producing a thermoplastic resin prepreg, comprising impregnating a reinforcing fiber substrate with a thermoplastic resin composition,
the method for producing a thermoplastic resin prepreg being **characterized in that** the thermoplastic resin composition contains 50 mass% or more of polyetherketoneketone (PEKK) based on the total thermoplastic resin composition, and is a thermoplastic resin composition in which the total amount of aluminum, phosphorus, and sodium contained in the PEKK is 100 ppm or less.

**12.** A method for producing a thermoplastic resin prepreg comprising partially or completely impregnating a reinforcing fiber substrate with a thermoplastic resin composition,

the method for producing a thermoplastic resin prepreg being **characterized in that**
the thermoplastic resin composition contains 50 mass% or more of polyetherketoneketone (PEKK) based on the total thermoplastic resin composition, and,
of all arylene ether ketone structural units represented by the following chemical formula (I) contained in the PEKK, the proportion of structural isomers in which the ether group is attached to Ar in the ortho-position relative to the ketone group is 1.6% or less:

[Chemical Formula 2]

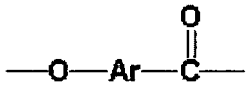 ・・・(I)

(wherein Ar represents an optionally substituted arylene group) .

**13.** A fiber-reinforced composite material comprising at least a reinforcing fiber substrate and a thermoplastic resin composition,
the fiber-reinforced composite material being **characterized in that** the thermoplastic resin composition contains 50 mass% or more of polyetherketoneketone (PEKK) based on the total thermoplastic resin contained in the resin composition, and is a thermoplastic resin composition having a crystallization enthalpy of 22 J/g or more as measured by a differential scanning calorimeter (DSC) at a cooling rate of 50°C/min from 400°C.

**14.** A fiber-reinforced composite material comprising at least a reinforcing fiber substrate and a thermoplastic resin composition,
the fiber-reinforced composite material being **characterized in that** the thermoplastic resin composition contains 50 mass% or more of polyetherketoneketone (PEKK) based on the total thermoplastic resin contained in the resin composition, and the PEKK includes a first PEKK and a second PEKK having a lower reduced viscosity than the first PEKK.

**15.** A fiber-reinforced composite material comprising at least a reinforcing fiber substrate and a thermoplastic resin composition,
the fiber-reinforced composite material being **characterized in that** the thermoplastic resin composition contains 50 mass% or more of polyetherketoneketone (PEKK) based on the total thermoplastic resin composition, and the total amount of aluminum, phosphorus, and sodium contained in the PEKK is 100 ppm or less.

**16.** A fiber-reinforced composite material comprising at least a reinforcing fiber substrate and a thermoplastic resin composition,

the fiber-reinforced composite material being **characterized in that**
the thermoplastic resin composition contains 50 mass% or more of polyetherketoneketone (PEKK) based on the total thermoplastic resin composition, and,
of all arylene ether ketone structural units represented by the following chemical formula (I) contained in the PEKK, the proportion of structural isomers in which the ether group is attached to Ar in the ortho-position relative to the ketone group is 1.6% or less:

[Chemical Formula 3]

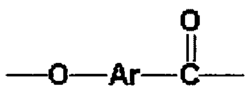 ・・・(I)

(wherein Ar represents an optionally substituted arylene group) .

## INTERNATIONAL SEARCH REPORT

International application No.
PCT/JP2020/015130

**A. CLASSIFICATION OF SUBJECT MATTER**
C08L 71/00(2006.01)i; C08J 5/04(2006.01)i
FI: C08J5/04 CEZ; C08L71/00
According to International Patent Classification (IPC) or to both national classification and IPC

**B. FIELDS SEARCHED**
Minimum documentation searched (classification system followed by classification symbols)
C08L71/00; C08J5/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2018/115490 A1 (ARKEMA FRANCE) 28.06.2018 (2018-06-28) claims, paragraphs [0044]-[0047], examples 1-5 | 13, 16<br>1, 7-9, 12 |
| Y | JP 2018-138383 A (THE BOEING CO.) 06.09.2018 (2018-09-06) paragraphs [0100]-[0101] | 1, 7-9, 12 |
| Y | JP 2017-523256 A (CYTEC INDUSTRIES INC.) 17.08.2017 (2017-08-17) claims | 1, 7-9, 12 |
| Y | JP 2011-513529 A (VICTREX MANUFACTURING LIMITED) 28.04.2011 (2011-04-28) paragraphs [0071]-[0072] | 1, 7-9, 12 |
| A | WO 2012/176788 A1 (TORAY INDUSTRIES, INC.) 27.12.2012 (2012-12-27) entire text | 1-16 |
| A | WO 2018/115739 A1 (ARKEMA FRANCE) 28.06.2018 (2018-06-28) entire text | 1-16 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June 2020 (10.06.2020) | 23 June 2020 (23.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/015130

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/056693 A1 (TEIJIN LTD.) 06.04.2017 (2017-04-06) entire text | 1-16 |

Form PCT/ISA/210 (continuation of second sheet) (January 2015)

**INTERNATIONAL SEARCH REPORT**
Information on patent family members

International application no.
PCT/JP2020/015130

| Patent Documents referred in the Report | Publication Date | Patent Family | Publication Date |
|---|---|---|---|
| WO 2018/115490 A1 | 28 Jun. 2018 | EP 3339386 A1<br>CN 110099973 A<br>KR 10-2019-0097044 A | |
| JP 2018-138383 A | 06 Sep. 2018 | US 2018/0162101 A1<br>paragraphs [0116]-[0117]<br>EP 3335870 A1<br>CN 108215395 A | |
| JP 2017-523256 A | 17 Aug. 2017 | US 2015/0337183 A1<br>claims<br>EP 3145985 A1<br>CA 2949691 A<br>CN 106459560 A | |
| JP 2011-513529 A | 28 Apr. 2011 | US 2011/0003163 A1<br>paragraphs [0068]-[0069]<br>WO 2009/106868 A1<br>EP 2254748 A1<br>AU 2009219946 A<br>CA 2715316 A<br>CN 101965259 A<br>KR 10-2010-0132019 A<br>RU 2010137745 A | |
| WO 2012/176788 A1 | 27 Dec. 2012 | JP 2013-6352 A<br>US 2014/0155540 A1<br>EP 2725055 A1<br>CN 103608386 A<br>KR 10-2014-0024870 A<br>TW 201307449 A | |
| WO 2018/115739 A1 | 28 Jun. 2018 | EP 3558614 A1<br>FR 3061067 A<br>CN 110087847 A<br>KR 10-2019-0095293 A | |
| WO 2017/056693 A1 | 06 Apr. 2017 | US 2018/0134856 A1<br>EP 3281969 A1<br>CN 107531914 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3065205 A
- US 3441538 A
- US 3442857 A
- US 3516966 A
- US 4704448 A
- US 4816556 A
- US 6177518 B
- JP 2017149804 A


### Non-patent literature cited in the description


- *Polymer,* 1997, vol. 38 (14), 3441